# DEMANDE DE BREVET EUROPEEN

(11) **EP 1 055 988 A1**
(43) Date de publication de la demande: **29.11.2000**
(21) Numéro de dépôt: 00401412.2
(22) Date de dépôt: 23.05.2000
(51) Int. Cl.: G06F 1/00

(54) **Procédé de contrôle d'accès à des fonctions de programmes informatiques.**

(30) Priorité: 27.05.1999 FR 9906731
(71) Demandeur: BULL S.A., 78434 Louveciennes Cedex (FR)
(72) Inventeur: Frerebeau, Laurent, 78000 Versailles (FR); Schwartz, Jean-Etienne, 49140 Villeveque (FR)

(57) **Abrégé**

La présente invention concerne un procédé de contrôle d'accès d'au moins un module (2) à au moins une fonction (1), dite fonction protégée, dans un système informatique, consistant à adjoindre un portier (3) aux fonctions (1) protégées, le portier (3) étant susceptible, à l'appel par un module (2) d'une fonction (1) protégée, de contrôler l'accès à la fonction protégée concernée.

La présente invention concerne également le système mettant en oeuvre ledit procédé.

## Description

La présente invention concerne le domaine du contrôle d'accès dans des systèmes informatiques.

### L'art antérieur

Le problème posé par la présente invention repose sur le contrôle d'accès à des fonctions déterminées de programmes complexes ou de librairies dans des systèmes informatiques.

Dans de nombreuses situations, il est souhaitable de limiter l'accès à certaines fonctions selon la nature du module logiciel appelant. A titre illustratif, il en est ainsi des fonctions locales de bas niveau d'une librairie. Les fonctions de bas niveau correspondent, par exemple, à des fonctions de traitement direct avec des composants matériels du système informatique contrairement aux fonctions de haut niveau effectuant des traitements purement logiciels. Les fonctions de bas niveau ne doivent pas être visibles du module applicatif appelant mais elles peuvent être appelées par des fonctions de haut niveau. L'accès aux fonctions de bas niveau doit être refusé au module applicatif appelant même si ce dernier utilise une syntaxe d'appel correcte.

Le problème du contrôle d'accès se pose également selon un autre exemple dans la vente de logiciels. Le logiciel est fourni dans sa totalité alors que seules certaines fonctionnalités sont achetées. Il serait donc souhaitable que l'acheteur ne puisse utiliser que les fonctions faisant l'objet d'un paiement.

La limitation d'accès à certaines fonctions est également nécessaire dans le cas de contraintes légales, droits d'usage ou exportations de fonctions cryptographiques ou encore en fonction de choix d'implémentation.

Les solutions courantes connues pour limiter ou interdire l'accès à des fonctions sont les suivantes.

Selon une première solution, les fonctions dont l'accès doit être interdit sont retirées du logiciel vendu : une version spécialement compilée sans les fonctions concernées est livrée au client. Cette première solution requiert la conception de nombreuses versions suivant les diverses fonctionnalités souhaitées par les uns et les autres. De plus, un groupe d'utilisateurs peut souhaiter utiliser un même produit tout en limitant l'accès de certaines fonctions à certains utilisateurs du groupe, ce qui n'est pas réalisable avec cette première solution.

Selon une deuxième solution, toutes les fonctionnalités du logiciel concerné sont livrées à l'utilisateur mais aucune documentation n'est fournie sur les fonctions internes dudit logiciel. Le problème est qu'en théorie, quiconque réussit à se procurer ladite documentation peut solliciter les fonctions internes.

Un but de la présente invention est de permettre un contrôle d'accès à des fonctions déterminées d'un programme, d'une librairie ou équivalent.

Un autre but de la présente invention est de contrôler l'accès à des fonctions déterminées en fonction du module appelant.

### Résumé de l'invention

Dans ce contexte, la présente invention propose un procédé de contrôle d'accès d'au moins un module à au moins une fonction, dite fonction protégée, dans un système informatique, caractérisé en ce qu'il consiste à adjoindre un portier aux fonctions protégées, le portier étant susceptible, à l'appel par un module d'une fonction protégée, de contrôler l'accès à la fonction protégée concernée.

La présente invention concerne également le système de mise en oeuvre dudit procédé.

La présente invention se rapporte également à un système de contrôle d'accès d'au moins un module à au moins une fonction dans un système informatique, caractérisé en ce qu'il comprend des portiers adjoints aux fonctions protégées, des moyens de mémorisation associés au portier et aux fonctions et permettant de stocker des états de protection et des codes d'accès associés.

### Présentation des figures

D'autres caractéristiques et avantages de l'invention apparaîtront à la lumière de la description qui suit, donnée à titre d'exemple illustratif et non limitatif de la présente invention, en référence aux dessins annexés dans lesquels:
- la figure 1 est une vue schématique d'une étape du procédé selon une forme de réalisation de l'invention;
- la figure 2 est une vue schématique d'une étape du procédé selon l'invention suivant celle représentée sur la figure 1.

### Description d'une forme de réalisation de l'invention

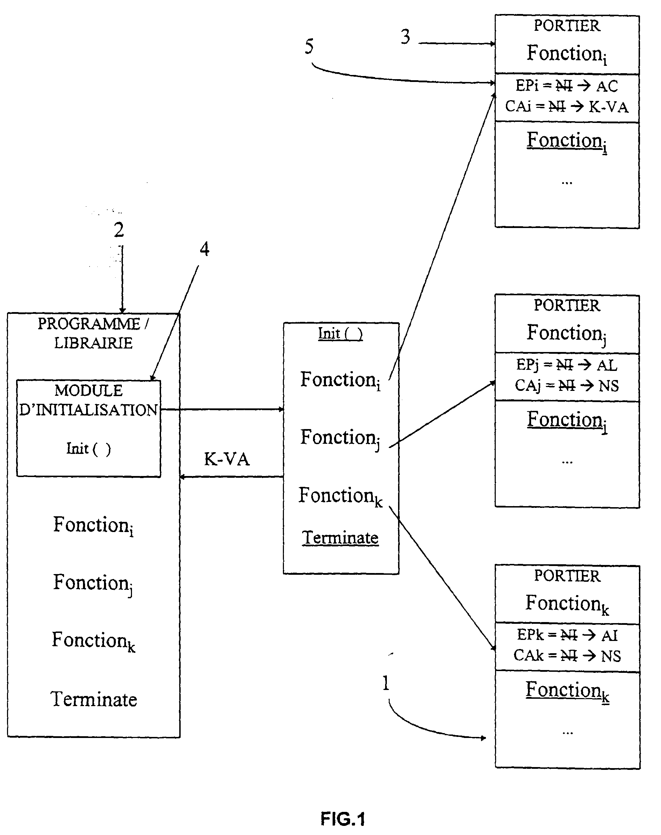

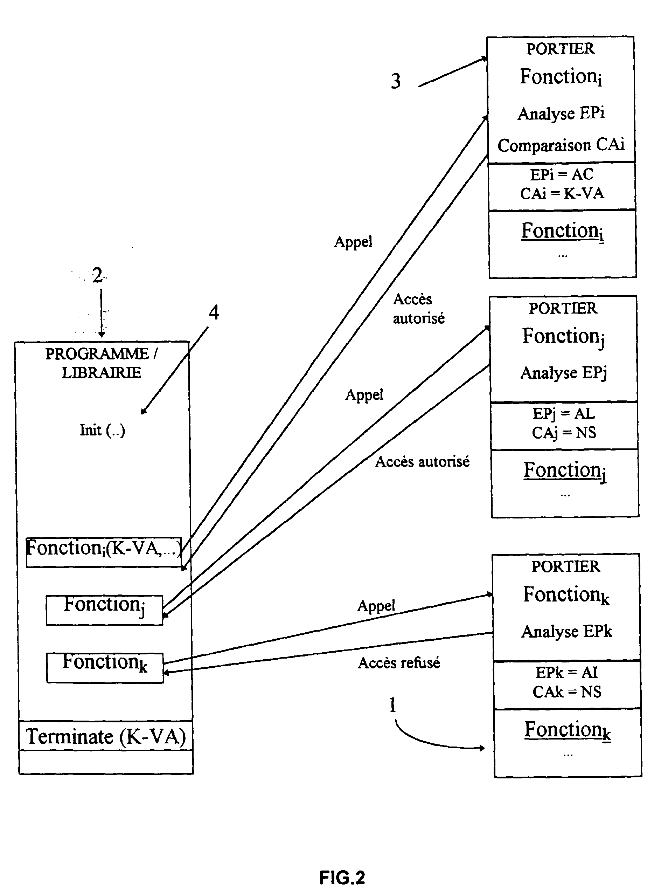

Comme le montrent les figures 1 et 2, la présente invention porte sur un procédé de contrôle d'accès à des fonctions 1 (Fonctionᵢ, Fonctionⱼ, Fonctionₖ sur les figures 1 et 2) dans un système informatique.

Une fonction 1 est définie comme une action exécutable par un module 2, un module 2 étant défini comme un programme actif tel qu'une autre fonction, un programme principal, une librairie ou autre.

Le système informatique peut être un système dont l'environnement est de type distribué ou local.

Le procédé s'applique à tout type de modules 2 (programmes, librairies ou équivalents) nécessitant l'utilisation des fonctions 1 (Fonctionᵢ, Fonctionⱼ, Fonctionₖ dans l'exemple illustré).

Le procédé selon la présente invention consiste à positionner un portier 3 au niveau des fonctions 1 (Fonctionᵢ, Fonctionⱼ, Fonctionₖ, figures 1 et 2) dont l'accès doit être contrôlé. Les fonctions 1 dont l'accès est contrôlé, à savoir autorisé, limité ou interdit, sont appelées fonctions 1 protégées. Selon une forme de réalisation de l'invention, le portier 3 d'une fonction protégée 1 donnée est un programme appelé à chaque fois qu'un module 2 fait appel aux services de ladite fonction 1, et destiné à autoriser, limiter ou interdire l'accès à ladite fonction 1 selon le module 2 appelant.

Chaque fonction protégée 1 dispose de deux informations utilisées par le portier 3 :
■ l'état de protection EP (EPi, EPj, EPk, sur les figures 1 et 2) de la fonction 1 (respectivement Fonctionᵢ, Fonctionⱼ, Fonctionₖ);
■ le code d'accès CA (CAi, CAj, CAk) à la fonction 1 (respectivement Fonctionᵢ, Fonctionⱼ, Fonctionₖ).

L'état de protection EP et le code d'accès CA sont définis ci-après.

L'état de protection EP (EPi, EPj, EPk, sur les figures 1 et 2) définit l'accès à la fonction 1 (respectivement Fonctionᵢ, Fonctionⱼ, Fonctionₖ) protégée associée. Dans la forme de réalisation décrite, l'état de protection prend quatre valeurs: accès non initialisé NI, accès libre AL, accès contrôlé (ou limité) AC ou accès interdit AI.

L'état de protection, 〈〈accès non initialisé 〉〉 NI, est l'état de protection par défaut. Il est introduit tors de la compilation du module 2 (programme ou librairie ...) utilisant les fonctions 1.

Au lancement initial du programme ou de la librairie, le portier 3 active un module d'initialisation 4 qui positionne les états de protection EP de toutes les fonctions 1 protégées dans le programme concerné, parmi les trois valeurs restantes AL, AC ou AI. Selon une deuxième forme de réalisation, l'initialisation de toutes les fonctions protégées intervient sur détection d'une fonction 1 non initialisée. Selon une troisième forme de réalisation, l'initialisation intervient au coup par coup : sur détection d'une fonction 1 non initialisée, le module d'initialisation 4 positionne l'état de protection de la dite fonction. Selon une quatrième forme de réalisation, les valeurs des états de protection EP sont fixées directement par des options de compilation.

Si l'état de protection d'une fonction 1 a pour valeur 〈〈 accès libre 〉〉 AL, le portier 3 autorise un accès sans restriction à ladite fonction 1, quelque soit l'appelant. Aucun contrôle de code d'accès n'est effectué.

Dans le cas d'un état de protection correspondant à un 〈〈 accès contrôlé 〉〉 AC, l'accès à la fonction concernée est limité à certains modules appelants. Dans la forme de réalisation décrite, la limitation de l'accès à une fonction est réalisée au moyen du code d'accès CA, partagé entre ladite fonction et un module appelant donné. L'accès n'est autorisé que si le code d'accès présenté par le module 2 appelant correspond au code d'accès positionné par le module d'initialisation 4 ou les options de compilation pour la fonction 1 en question.

Dans le cas d'un état de protection d'une fonction 1 ayant pour valeur 〈〈accès interdit 〉〉, l'accès à ladite fonction 1 est refusé quelque soit le modulé appelant. La fonction 1 est inutilisable.

Le code d'accès CA est un code partagé entre un ou plusieurs modules 2 appelants et une ou plusieurs fonctions 1 déterminées pour limiter l'accès desdites fonctions auxdits modules appelants. Sa nature et sa longueur dépendent des choix et des contraintes d'implémentation ainsi que du niveau de sécurité exigé. Le code d'accès n'est significatif que si l'état de protection associé est un accès contrôlé AC. La valeur du code d'accès CA est chargée dynamiquement par le module d'initialisation 4 au lancement du programme ou de la librairie, sur détection d'une fonction non initialisée, par des options de compilation ou encore au coup par coup sur détection d'une fonction non initialisée, de la même façon que l'état de protection EP. Avant l'initialisation, l'état de protection EP ayant la valeur 〈〈 non initialisé 〉〉 NI, le code d'accès CA présente une valeur non significative : dans l'exemple décrit, lorsque l'état de protection EP est non initialisé, le code d'accès CA a une valeur par défaut unique NI quelque soit la fonction (figure 1).

Le module d'initialisation 4 est susceptible de se présenter sous diverses formes.

Selon une première forme, le module d'initialisation 4, comme le montrent les figures 1 et 2, est programmé en dur, c'est-à-dire qu'il est intégré de manière fixe au code du module 2. Le paramétrage est défini de manière interne au module 4.

Selon une deuxième forme, le module d'initialisation fait appel à une clé logicielle de type connu et détermine les valeurs des états de protection et code d'accès associés avec les habilitations contenues dans ladite clé. Selon un exemple de forme de réalisation, la clé logicielle consiste en une structure de données sécurité contenant des habilitations indiquant les droits d'accès aux fonctions. La structure de données sécurité peut se présenter sous la forme connue de jeton Kerberos ou de PAC (Privilege Attribute Certificate - Certificat d'attribut privilège) SESAME ou DCE. Un avantage de cet exemple de forme de réalisation est de permettre l'utilisation d'outils d'administration existant permettant d'administrer le contrôle d'accès des modules 2 aux fonctions 1 protégées.

Selon une troisième forme, le module d'initialisation se présente sous la forme d'options de compilation qui déterminent les états de protection et code d'accès associés lors de la compilation du programme ou librairie.

Les états de protection EP et codes d'accès CA sont stockés dans des moyens de mémorisation 5.

Le procédé selon la présente invention se déroule de la manière suivante.

Le module 2, programme ou librairie ou autre, est lancé.

Selon une forme de réalisation du procédé selon l'invention illustrée sur la figure 1, le module 2 commence par appeler le module d'initialisation 4 〈〈 init () 〉〉.

Selon une autre forme de réalisation, le module d'initialisation 4 n'est appelé et exécuté que lorsqu'une fonction 1 non initialisée est détectée.

Le module d'initialisation 4 charge dynamiquement l'ensemble des valeurs des états de protection EP et codes d'accès CA associés.

Dans la forme de réalisation illustrée sur les figures 1 et 2, les états de protection et codes d'accès sont différenciés pour chaque fonction protégée Fonctionᵢ, Fonctionⱼ, Fonctionₖ : à chaque fonction protégée Fonctionᵢ, Fonctionⱼ, Fonctionₖ, sont associés un état de protection propre et un code d'accès propre, indépendants des états de protection et codes d'accès des autres fonctions.

Selon d'autres formes de réalisation de l'invention, il est défini un seul état de protection global et/ou un seul code d'accès global, positionné de manière identique pour chaque fonction protégée d'un même module (programme ou librairie ou autre).

Le code d'accès associé à un état de protection ayant pour valeur 〈〈 accès contrôlé 〉〉 d'une fonction protégée 1 déterminée est susceptible d'être calculé de manière aléatoire par tout type de moyen connu puis positionné au niveau des fonctions 1 lors de l'initialisation ou de la compilation. Le code d'accès peut également correspondre à une valeur secrète telle qu'un mot de passe : la valeur secrète est susceptible d'être chiffrée.

Dans la forme de réalisation illustrée sur la figure 1, les états de protection EP sont différenciés pour chaque fonction 1. Le module 2 appelle le module d'initialisation 4 init(). Le module d'initialisation 4 init() calcule un code d'accès de manière aléatoire et unique pour toutes les fonctions dont l'état de protection est à accès contrôlé. Dans l'exemple décrit, le code d'accès calculé est égal à K-VA. Le module d'initialisation 4 positionne les états de protection EPi, EPj, EPk et les codes d'accès CAi, CAj, CAk de chacune des fonctions respectivement Fonctionᵢ, Fonctionⱼ, Fonctionₖ concarnées. Les états de protection EP des fonctions Fonctionᵢ, Fonctionⱼ, Fonctionₖ, dont les valeurs sont NI, prennent respectivement les valeurs AC, AL, et AI, et les codes d'accès CA associés, de valeur égale à NI, prennent respectivement les valeurs K-VA, NS (Non Significatif), NS.

Le module d'initialisation 4 retourne au(x) module(s) 2 concerné(s) les valeurs calculées et positionnées des différentes fonctions dont l'état de protection est à accès contrôlé, et dans l'exemple décrit et illustré sur la figure 1 la valeur K-VA du code d'accès CAi de la fonction Fonctionᵢ.

Le module 2 (programme ou librairie ou autre) en cours d'exécution fait ensuite appel aux fonctions Fonctionᵢ, Fonctionⱼ, Fonctionₖ protégées, comme le montrent les figures 1 et 2.

Seul le module 2 disposant du code d'accès CAi d'une fonction Fonctionᵢ déterminée à accès contrôlé peut accéder à la dite fonction Fonctionᵢ protégée par portier 3. Le module 2 appelant doit présenter le code d'accès CAi au portier 3 de la fonction Fonctionᵢ correspondante. A chaque appel d'une fonction 1 (Fonctionᵢ, Fonctionⱼ, Fonctionₖ) protégée, le portier 3 est activé : il vérifie l'état de protection EP de la fonction 1 et contrôle si nécessaire le code d'accès CA transmis par l'appelant en le comparant au code d'accès de ladite fonction 1 protégée.

Dans l'exemple illustré sur la figure 2, le module 2 ayant reçu le code d'accès K-VA après initialisation, appelle la fonction Fonctionᵢ en présentant au portier 3 le code d'accès K-VA. Le portier 3 vérifie l'état de protection EPi de la fonction Fonctionᵢ. La fonction Fonction, est à accès contrôlé. Le portier 3 compare alors le code d'accès transmis par le module 2 avec le code d'accès de la fonction Fonctionᵢ. Si les codes d'accès sont identiques, l'accès à la fonction est autorisé. Dans le cas contraire, l'accès est refuse.

Le module 2 appelle ensuite la fonction Fonctionⱼ. Le portier vérifie l'état de protection EPj de la fonction Fonctionⱼ. La fonction Fonctionⱼ est à accès libre : la valeur non significative du code d'accès n'est donc pas prise en considération. Le portier 3 autorise l'accès du module 2 à la fonction Fonctionⱼ.

Le module 2 appelle la fonction Fonctionₖ. Le portier 3 vérifie l'état de protection EPk de la fonction Fonctionₖ. La fonction Fonctionₖ est à accès interdit: la valeur non significative du code d'accès n'est donc pas prise en considération. Le portier interdit l'accès à la fonction en question.

Dans l'exemple illustré sur les figures 1 et 2, l'accès à certaines fonctions 1 est exclusivement limité à d'autres fonctions du même ensemble logiciel, ou à des programmes, ou encore à des librairies ou autres.

Ainsi, par exemple, des portiers 3 peuvent être positionnés au niveau de fonctions de bas niveau pour en permettre l'accès à des fonctions de haut niveau et en refuser l'accès à des programmes applicatifs.

Selon un autre exemple de réalisation de l'invention, une clé logicielle est associée aux fonctionnalités vendues à un utilisateur.

Dans cet exemple, chaque fonction 1 protégée dispose d'un état de protection EP propre. Le module 2 dispose d'un code d'accès CA global interne pour toutes les fonctions 1 protégées à accès contrôlé.

Le module d'initialisation lit la clé logicielle et calcule un code d'accès global associé ou dérivé de ladite clé. Le module d'initialisation positionne ensuite l'état de protection de chaque fonction selon les informations déduites de la clé logicielle et le code d'accès global si nécessaire.

Selon un autre exemple de réalisation de la présente invention, selon des choix d'implémentation ou des contraintes, des options de compilation positionnent des états de protection différenciés pour chacune des fonctions protégées. Il est également possible d'utiliser une variable intermédiaire lors de la compilation, susceptible d'être interprétée ensuite par le module d'initialisation.

Le module d'initialisation 4 est nécessaire lorsque les états de protection ne sont pas positionnés directement lors de la compilation ou lorsqu'une clé logicielle à partir de laquelle le code d'accès est déduit est utilisée.

L'annexe présente un exemple d'implémentation de la présente invention.

Dans l'exemple annexé, le module 2 appelant fait appel à une librairie de fonctions 1 en usage exclusif La librairie est considérée comme une ressource que peut réserver un programme appelant. Après utilisation, le module appelant libère la librairie afin de la rendre disponible pour d'autres modules.

Le module de réservation des fonctions de la librairie est activé par le programme appelant. Initialement, la librairie est non réservée.

L'accès aux fonctions protégées est toujours limité : un état de protection n'est donc pas nécessaire. Le code d'accès est déterminé par le programme appelant.

Le module de réservation s'assure que la librairie n'est pas déjà réservée par un autre programme. Si la librairie est libre, elle devient réservée et le code de protection est mémorisé localement.

Chaque appel de fonction protégée est accompagné du code d'accès.

La fonction 1protégée sollicitée vérifie:
1. que la librairie est réservée;
2. que le code fourni correspond au code d'accès mémorisé localement.

Dans ce type d'implémentation, un module spécifique est ajouté pour assurer la libération de la librairie. Le programme appelant sollicite ledit module en donnant le code d'accès.

La présente invention se rapporte à un procédé de contrôle d'accès d'au moins un module 2 à au moins une fonction 1 protégée, dans un système informatique. Le procédé est caractérisé en ce qu'il consiste à adjoindre le portier 3 aux fonctions 1 protégées, le portier 3 étant susceptible, à l'appel par un module 2 d'une fonction 1 protégée, de contrôler l'accès à la fonction protégée concernée.

Selon une forme de réalisation du procédé selon l'invention, le procédé consiste à associer l'état de protection EP et le code d'accès CA aux fonctions protégées 1, l'état de protection définissant le type d'accès aux dites fonctions protégées:
- un accès libre, sans restriction;
- un accès limité, soumis à la présentation du code d'accès CA;
- un accès interdit.

A l'appel par le module 2 d'une fonction 1 protégée, le portier 3 vérifie l'état de protection EP de ladite fonction protégée et contrôle le code d'accès CA transmis par le module 2 si l'état de protection requiert un accès limité à ladite fonction protégée.

Lorsque l'état de protection requiert un accès limité à une fonction protégée, le portier 3 compare le code d'accès transmis par le module 2 et le code d'accès de la fonction à laquelle le module 2 souhaite accéder et autorise l'accès si les codes d'accès sont identiques.

Le procédé selon l'invention consiste à positionner à l'aide du module d'initialisation 4 les valeurs des états de protection et codes d'accès associés des fonctions protégées. Le module d'initialisation 4 est activé au lancement du module 2 ou sur détection d'une fonction protégée non initialisée.

Le module d'initialisation 4 utilise un paramétrage interne programmé en dur ou une clé logicielle et les habilitations qu'elle contient ou encore une variable intermédiaire produite lors de la compilation et les habilitations qu'elle contient.

Le procédé selon l'invention consiste également, avant initialisation et lors de la compilation du module 2, à donner aux états de protection une valeur déterminée, dite non initialisée.

Selon une autre forme de réalisation, le procédé consiste à positionner les états de protection et codes d'accès associés par des options de compilation.

Le procédé consiste à retourner, après positionnement des états de protection et codes d'accès associés, la valeur des codes d'accès correspondants aux états de protection à accès limité au module 2.

Selon une forme de réalisation particulière de l'invention, le procédé consiste à calculer de manière aléatoire les codes d'accès CA des fonctions 1 dont l'état de protection est à accès limité.

La présente invention porte également sur un système de contrôle d'accès d'au moins un module 2 à au moins une fonction 1 dans un système informatique. Le système est caractérisé en ce qu'il comprend des portiers 3 adjoints aux fonctions 1 protégées, les moyens de mémorisation 5 associés aux portiers et aux fonctions et permettant de stocker des états de protection et des codes d'accès associés.

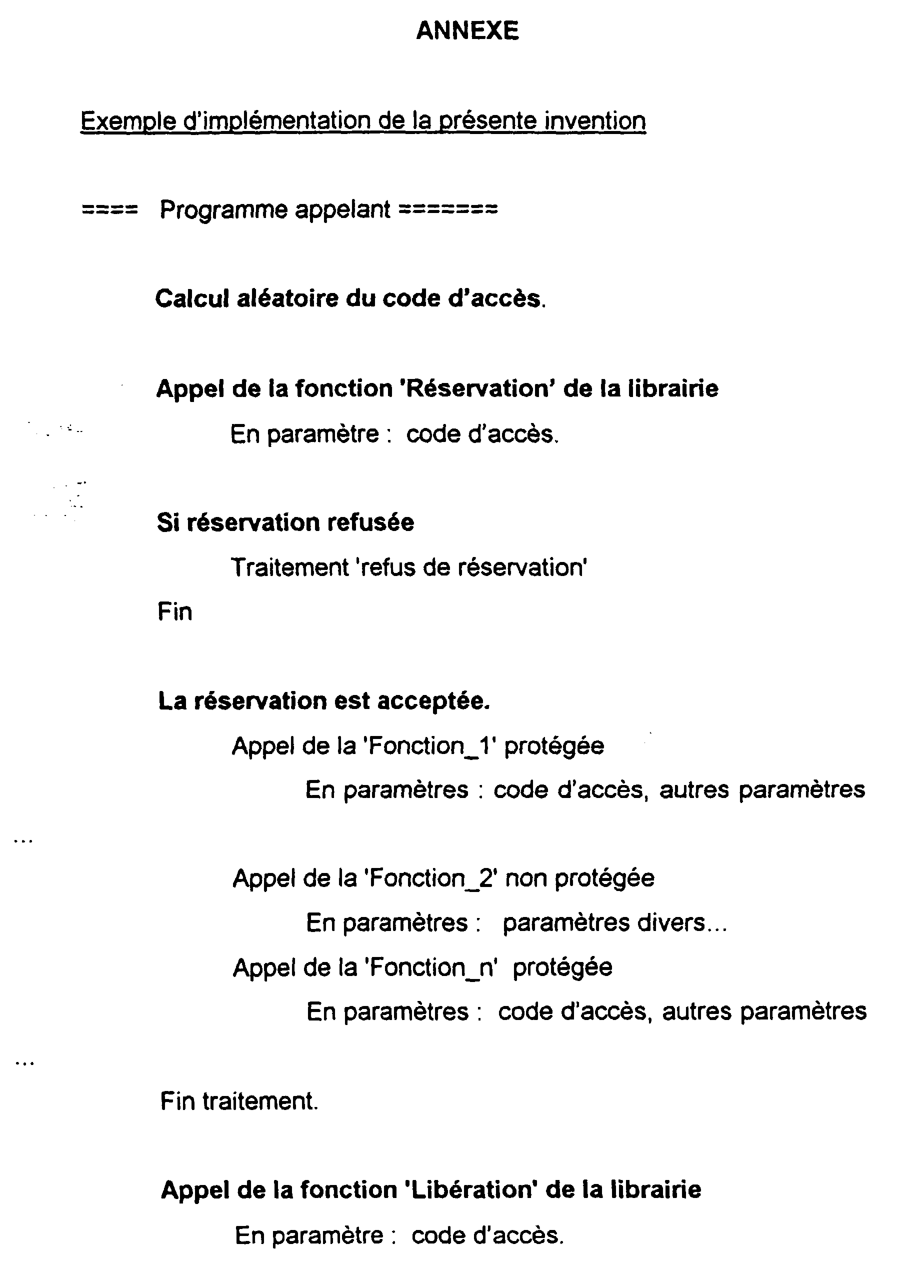

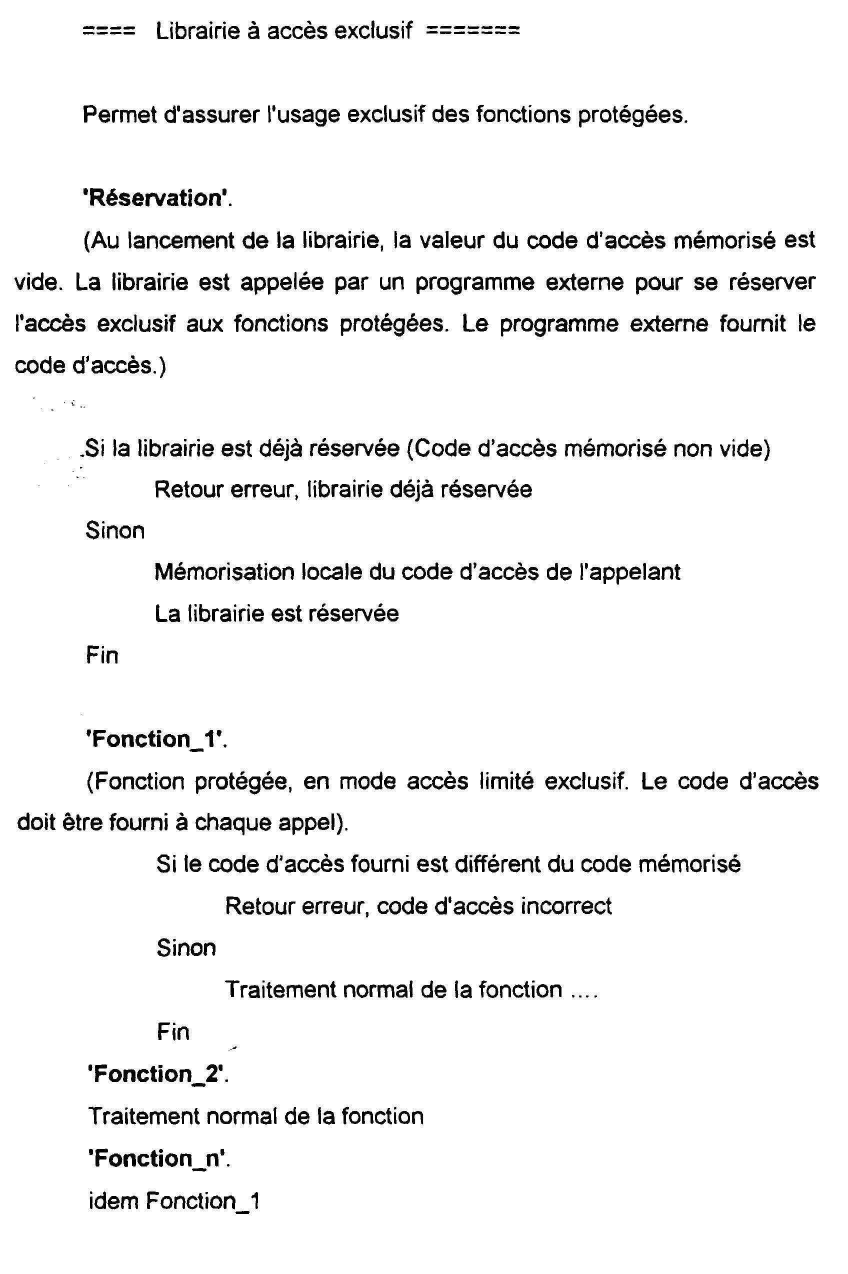

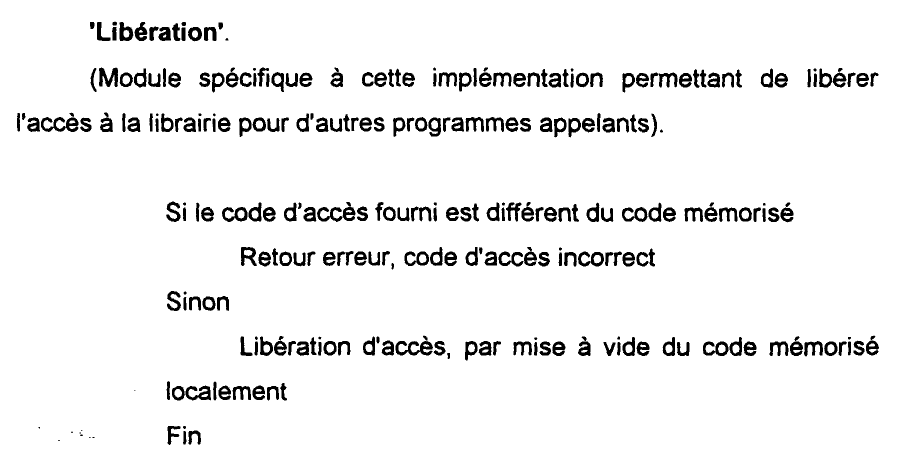

## Revendications

1. Procédé de contrôle d'accès d'au moins un module (2) à au moins une fonction (1), dite fonction protégée, dans un système informatique, caractérisé en ce qu'il consiste à adjoindre un portier (3) aux fonctions (1) protégées, le portier (3) étant susceptible, à l'appel par un module (2) d'une fonction (1) protégée, de contrôler l'accès à la fonction protégée concernée.

2. Procédé selon la revendication 1, caractérisé en ce qu'il consiste à associer un état de protection EP et un code d'accès CA aux fonctions protégées (1), l'état de protection définissant le type d'accès aux dites fonctions protégées:
• un accès libre, sans restriction;
• un accès limité, soumis à la présentation du code d'accès CA;
• un accès interdit.

3. Procédé selon la revendication 2, caractérisé en ce que, à l'appel par le module (2) d'une fonction protégée, le portier (3) vérifie l'état de protection EP de ladite fonction protégée et contrôle le code d'accès CA transmis par le module (2) si l'état de protection requiert un accès limité à ladite fonction protégée.

4. Procédé selon la revendication 3, caractérisé en ce que, lorsque l'état de protection requiert un accès limité à une fonction protégée, le portier (3) compare le code d'accès transmis par le module (2) et le code d'accès de la fonction à laquelle le module (2) souhaite accéder et autorise l'accès si les codes d'accès sont identiques.

5. Procédé selon l'une des revendications 2 à 4, caractérisé en ce qu'il consiste à positionner à l'aide d'un module d'initialisation (4) les valeurs des états de protection et codes d'accès associés des fonctions protégées.

6. Procédé selon la revendication 5, caractérisé en ce qu'il consiste, avant initialisation et lors de la compilation du module (2), à donner aux états de protection une valeur déterminée, dite non initialisée.

7. Procédé selon l'une des revendications 5 ou 6, caractérisé en ce qu'il consiste à activer le module d'initialisation (4) au lancement du module (2) ou sur détection d'une fonction protégée non initialisée.

8. Procédé selon l'une des revendications 5 à 7, caractérisé en ce que le module d'initialisation (4) utilise un paramétrage interne programmé en dur ou une clé logicielle et les habilitations qu'elle contient ou encore une variable intermédiaire produite lors de la compilation et les habilitations qu'elle contient.

9. Procédé selon l'une des revendications 2 à 4, caractérisé en ce qu'il consiste à positionner les états de protection et codes d'accès associés par des options de compilation.

10. Procédé selon l'une des revendications 5 à 9, caractérisé en ce qu'il consiste à retourner, après positionnement des états de protection et codes d'accès associés, la valeur des codes d'accès correspondants aux états de protection à accès limité au module (2).

11. Procédé selon l'une des revendications 2 à 10, caractérisé en ce qu'il consiste à calculer de manière aléatoire les codes d'accès CA dont l'état de protection est à accès limité.

12. Système de mise en oeuvre du procédé selon l'une des revendications 1 à 11.

13. Système de contrôle d'accès d'au moins un module (2) à au moins une fonction (1) dans un système informatique, caractérisé en ce qu'il comprend des portiers (3) adjoints aux fonctions (1) protégées, des moyens de mémorisation (5) associés au portier et aux fonctions et permettant de stocker des états de protection et des codes d'accès associés.
